(19) Europäisches Patentamt / European Patent Office / Office européen des brevets

(11) **EP 3 263 312 B2**

(12) **NOUVEAU FASCICULE DE BREVET EUROPEEN**
Après la procédure d'opposition

(45) Date de publication et mention de la décision concernant l'opposition:
**10.04.2024   Bulletin 2024/15**

(45) Mention de la délivrance du brevet:
**27.02.2019   Bulletin 2019/09**

(21) Numéro de dépôt: **17305812.4**

(22) Date de dépôt: **29.06.2017**

(51) Classification Internationale des Brevets (IPC):
*B29C 49/12* (2006.01)   *B29C 49/78* (2006.01)
*B29C 49/06* (2006.01)   *B29C 49/32* (2006.01)
*B29C 49/48* (2006.01)   *B29K 67/00* (2006.01)
*B29L 31/00* (2006.01)

(52) Classification Coopérative des Brevets (CPC):
**B29C 49/06; B29C 49/12;** B29C 49/1232;
B29C 2049/023; B29K 2067/003; B29L 2031/7158

(54) **PROCEDE DE FABRICATION PAR ETIRAGE SOUFFLAGE D'UN RECIPIENT A VITESSE D'ETIRAGE ELEVEE**

HERSTELLUNGSVERFAHREN DURCH STRECKBLASFORMEN EINES BEHÄLTERS MIT HOHER STRECKGESCHWINDIGKEIT

METHOD FOR MANUFACTURING A CONTAINER BY STRETCH-BLOWING WITH HIGH-SPEED STRETCHING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2016   FR 1656048**

(43) Date de publication de la demande:
**03.01.2018   Bulletin 2018/01**

(73) Titulaire: **Sidel Participations**
**76930 Octeville-sur-Mer (FR)**

(72) Inventeur: **DERRIEN, Mikaël**
**76930 Octeville-sur-mer (FR)**

(74) Mandataire: **Sidel Group**
**c/o Sidel Participations**
**Avenue de la Patrouille de France**
**76930 Octeville-sur-mer (FR)**

(56) Documents cités:
| | |
|---|---|
| EP-A1- 2 143 543 | EP-A1- 2 366 722 |
| WO-A1-2006/084214 | WO-A1-2011/113781 |
| DE-A1-102014 119 563 | US-A1- 2004 009 257 |
| US-A1- 2010 176 528 | US-A1- 2011 056 809 |
| US-A1- 2011 226 723 | US-A1- 2014 203 481 |
| US-A1- 2014 205 707 | US-A1- 2016 176 099 |

**Description**

L'invention a trait à la fabrication des récipients par étirage soufflage à partir d'ébauches en matière plastique tel que polyéthylène téréphtalate (PET). Des procédés apparentés sont décrits dans les documents US2011/056809A1 et US2014/205707A1.

Qu'il s'agisse d'une préforme ou d'un récipient intermédiaire ayant déjà subi une opération de préformage, une ébauche comprend un corps, généralement cylindrique de révolution, un col qui constitue le buvant du récipient à former, et un fond qui ferme le corps à l'opposé du col.

La technique classique de fabrication consiste à introduire l'ébauche, préalablement chauffée à une température supérieure à la température de transition vitreuse de la matière (environ 80°C dans le cas du PET), dans un moule muni d'une paroi définissant une cavité à l'empreinte du récipient, et à injecter dans l'ébauche, par le col, un fluide, tel qu'un gaz (généralement de l'air), sous pression pour plaquer la matière contre la paroi du moule. Le formage comprend en général une phase de présoufflage lors de laquelle le fluide est injecté à une pression de présoufflage relativement basse (ordinairement inférieure ou égale à 15 bars), et une phase de soufflage, postérieure à la phase de présoufflage, lors de laquelle le fluide est injecté à une pression de soufflage élevée (ordinairement supérieure ou égale à 25 bars), supérieure à la pression de présoufflage.

Sous l'effet de la pression, la matière ramollie par la chauffe forme une bulle qui enfle et se développe à la fois suivant une direction axiale, parallèle à l'axe principal du moule, et suivant une direction radiale, perpendiculaire à l'axe du moule.

Afin d'éviter tout désaxement du récipient (ce qui permet d'assurer une bonne répartition de la matière constitutive de l'ébauche dans le récipient fini), l'étirage axial de l'ébauche est forcé au moyen d'une une tige déplaçable axialement dans le moule, cette tige comprenant une extrémité distale venant repousser le fond de l'ébauche jusqu'à venir le plaquer contre un fond de moule à l'empreinte du fond du récipient.

Il est connu de commander le mouvement de la tige d'étirage au moyen d'un dispositif magnétique, cf. la demande internationale WO2012/156614 (Sidel Participations).

Il a été démontré, cf. par ex. la demande internationale WO2008/081107 (Sidel Participations), que le bon formage d'un récipient repose sur un équilibre subtil entre divers paramètres incluant la température de chauffe des ébauches, la vitesse d'étirage, la pression de fluide injecté dans les ébauches, et les instants auxquels sont commandés successivement le présoufflage et le soufflage.

L'application des nouvelles normes environnementales incite les exploitants des installations de fabrication de récipients à diminuer leur consommation énergétique. Les fabricants doivent redoubler d'ingéniosité pour proposer des solutions permettant de diminuer la consommation énergétique tout en préservant la qualité des récipients produits, afin de répondre aux attentes des consommateurs.

L'invention vise à proposer une solution allant en ce sens, et permettant des gains substantiels en termes de consommation énergétique, tout en préservant la qualité des récipients.

A cet effet, il est proposé un procédé selon la revendication 1.

Diverses caractéristiques supplémentaires peuvent être prévues, seules ou en combinaison. Ainsi :

- la vitesse maximale peut est maintenue pendant la majeure partie de la phase de présoufflage ;
- la vitesse maximale de déplacement de la tige est avantageusement de l'ordre de 3 m/s.

D'autres objets et avantages de l'invention apparaîtront à la lumière de la description d'un mode de réalisation, faite ci-après en référence aux dessins annexés dans lesquels :

- la **FIG.1** est une vue coupe, en perspective, montrant une unité de formage de récipients ;
- la **FIG.2** est une vue de détail en coupe et en perspective, à plus grande échelle, de l'unité de formage de la **FIG.1,** suivant le médaillon II ;
- la **FIG.3** est une vue en coupe, de face, de l'unité de formage de la **FIG.2** ;
- les **FIG.4, FIG.5** et **FIG.6** sont des vues de détail en coupe, de face, illustrant le formage d'un récipient à partir d'une préforme ;
- la **FIG.7** est un diagramme montrant l'évolution de la pression à l'intérieur de l'ébauche en fonction du temps, pendant un cycle complet de formage.

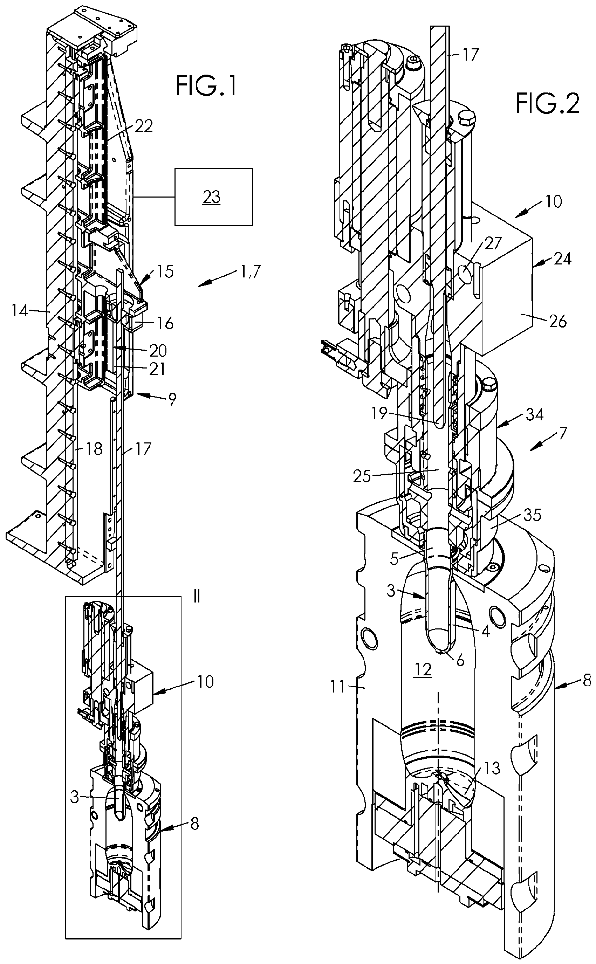

Sur les **FIG.1, FIG.2** et **FIG.3** est partiellement représentée une machine **1** de fabrication de récipients **2** par étirage soufflage d'ébauches, en l'occurrence des préformes **3,** en matière plastique (tel que du PET) comprenant un corps **4** sensiblement cylindrique, un col 5 dont la forme est définitive, et un fond **6** hémisphérique qui ferme le corps **4** à l'opposé du col **5.**

En pratique, la machine **1** est équipée d'une série d'unités **7** individuelles de formage par étirage soufflage, montés sur un carrousel (non représenté) entraîné en rotation autour d'un axe central. Chaque unité **7** de formage, telle que celle représentée sur les figures 1 à 3, comprend un moule **8,** une unité **9** d'étirage et une unité **10** d'injection surmontant le moule **8.**

Le moule **8** est par exemple du type portefeuille et comprend deux demi-moules articulés autour d'une charnière commune et qui s'ouvrent pour permettre, successivement, l'évacuation d'un récipient **2** formé et l'introduction d'une préforme **3** à former, préalablement chauffée dans une unité de chauffe (couramment dénommée « four »).

Le moule **8** comprend une paroi **11** définissant une cavité **12** à l'empreinte du récipient **2,** sensiblement symétrique de révolution autour d'un axe **X** longitudinal principal et présentant, dans une partie inférieure, une ouverture dans laquelle est monté un fond **13** de moule qui, avec la paroi **11,** complète l'empreinte du récipient 2.

L'unité **9** d'étirage comprend un bâti **14,** fixé au carrousel de la machine **1,** qui s'étend verticalement sensiblement à l'aplomb du moule **8,** et un équipage **15** mobile incluant un chariot **16** portant une tige **17** d'étirage. Le chariot **16** est monté coulissant sur un rail **18** solidaire du bâti **14,** entre :

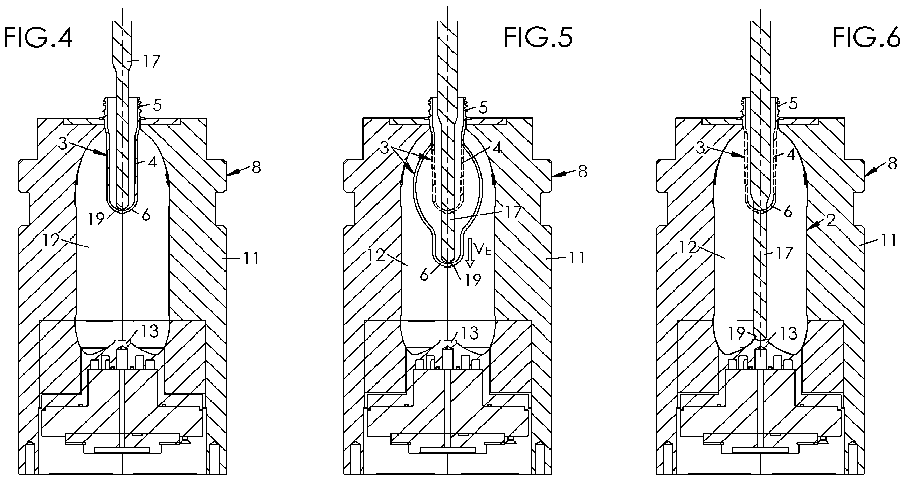

- une position haute **(FIG.2)** dans laquelle la tige **17** est complètement sortie du moule **8,** une extrémité **19** inférieure libre de la tige **17** se trouvant dans cette configuration à une distance du moule **8** supérieure à la hauteur du col **5,** de manière à permettre l'évacuation d'un récipient **2** formé et l'introduction d'une préforme **3** à souffler ;
- une position basse **(FIG.6),** dans laquelle la tige **17** d'étirage est reçue dans le moule **8** en venant au voisinage immédiat du fond **13** de moule, entraînant la prise en sandwich de la matière du récipient **2** entre l'extrémité **19** inférieure libre de la tige **17** et le fond **13** de moule.

L'unité **9** d'étirage est en outre équipée d'un dispositif **20** de commande électromagnétique du déplacement du chariot **16,** qui comprend :

- une paire de moteurs **21,** ici du type électromagnétiques et constitués par deux électroaimants fixés chacun sur une paroi latérale du bâti **14 ;**
- une paire de pistes **22** magnétiques disposée sur le chariot **16,** chaque piste **22** étant formée d'une série d'aimants permanents à polarité alternée, placées en regard et à faible distance de chacun des moteurs **21 ;**
- une unité **23** de contrôle (illustrée schématiquement sur la figure 5), reliée électriquement aux moteurs **21,** et programmée pour leur délivrer un signal électrique de commande.

L'unité **10** d'injection surplombe le moule **8** et a pour fonction d'introduire, dans la préforme **3** préalablement chauffée et suspendue dans le moule **8** par son col **5,** un fluide sous pression - notamment un gaz tel que de l'air - pour plaquer la matière contre la paroi **11** du moule **8** et lui conférer ainsi l'empreinte du récipient **2.**

L'unité **10** d'injection comprend, en premier lieu, un bloc **24** d'injection, fixé sur le carrousel à l'aplomb du moule **8** et définissant un conduit **25** fluidique colinéaire à l'axe **X** principal. Le conduit **25** fluidique a pour fonction de canaliser le fluide injecté dans la préforme **3** pour former le récipient **2,** et pour permettre le libre coulissement de la tige **17** d'étirage.

Selon un mode de réalisation illustré sur les dessins, le bloc **24** d'injection comprend un boîtier **26** réalisé dans un matériau rigide et pourvu d'au moins un orifice **27** d'alimentation relié :

- par un conduit **28** de présoufflage, à une source **29** de fluide (typiquement de l'air) à une pression PP de présoufflage relativement faible (comprise entre 5 et 15 bars) (par la suite, cette source **29** sera dénommée source **29** de présoufflage),
- et, par un conduit **30** de soufflage, à une source **31** de fluide (typiquement de l'air) à une pression PS de soufflage relativement élevée, et en tout état de cause supérieure à la pression PP de présoufflage (par la suite, cette source **31** sera dénommée source **31** de soufflage). La pression PS de soufflage est ordinairement de l'ordre de 25 à 40 bars, mais il sera expliqué comment il est possible de la diminuer sans sacrifier la qualité du récipient **2.**

Selon un mode préféré de réalisation, le conduit **28** de présoufflage et le conduit **30** de soufflage comprennent chacun une électrovanne **32, 33** respective reliée à l'unité **23** de contrôle, de sorte que cette dernière en commande l'ouverture et la fermeture pour placer successivement la source **29** de présoufflage et la source **31** de soufflage en communication avec l'intérieur de la préforme **3** permettant de la transformer en récipient **2.**

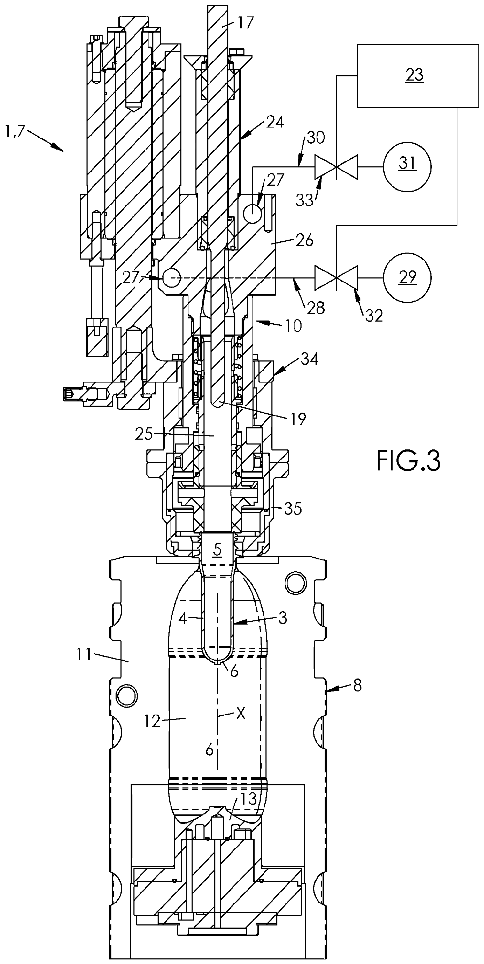

L'unité **10** d'injection comprend, en deuxième lieu, un équipage **34** mobile muni d'une tuyère **35** creuse, encore appelée tuyère-cloche, qui est montée sur le boîtier **26** et en communication fluidique avec le conduit **25.** L'équipage **34** mobile est, avec la tuyère **35** embarquée, monté en translation par rapport au moule **8** entre une position haute dans laquelle la tuyère **35** est écartée du moule **8** pour permettre l'évacuation d'un récipient **2** formé et l'introduction d'une préforme **3,** et une position basse **(FIG.3)** dans laquelle la tuyère **35** est en contact étanche avec le moule **8** pour permettre le formage d'un récipient **2** à partir d'une préforme **3.**

La fabrication d'un récipient **2** est réalisée comme suit.

Tout d'abord; lors d'une première phase, la préforme **3,** préalablement chauffée à une température supérieure à la température de transition vitreuse de la matière (environ 80°C dans le cas du PET), est introduite dans le moule **8.** Lorsque la préforme **3** est en position, le moule **8** est refermé puis l'unité **23** de contrôle commande le déplacement du chariot **16** (et donc de la tige **17** d'étirage) depuis sa position haute vers une position de départ dans laquelle l'extrémité **19** libre de la tige **17** vient au contact du fond **6** de la préforme **3** (figure 4).

Ensuite, lors d'une deuxième phase, dite de présoufflage, un fluide (normalement de l'air) à la pression PP de présoufflage est injecté dans la préforme **3** à partir de la source **29** de présoufflage par commande, à l'initiative de l'unité **23** de contrôle, de l'ouverture de l'électrovanne **32.**

Dans le même temps, la tige **17** d'étirage est déplacée, sur commande de l'unité **23 de** contrôle, depuis sa position de départ vers sa position basse.

Lors de la phase de présoufflage, la vitesse de déplacement de la tige **17** d'étirage, notée $V_E$, est réglée de sorte à maintenir le contact entre l'extrémité **19** libre de la tige **17** et le fond **6** de la préforme **3**.

A la fin de cette phase de présoufflage (**FIG.6**) :

- le récipient **2** n'est pas complètement formé, plusieurs zones n'étant toujours pas au contact de la paroi **11** en raison de l'insuffisance de la pression ;
- la tige **17** d'étirage, dans sa position basse, vient plaquer localement le fond **6** de la préforme **3** contre le fond **13** de moule. En d'autres termes, le fond **6** est pris en sandwich entre l'extrémité **19** libre de la tige **17** d'étirage et le fond **13** de moule.

Survient alors une troisième phase, dite de soufflage, lors de laquelle **3** un fluide (typiquement de l'air) à la pression **PS** de soufflage est injecté dans la préforme à partir de la source **31** de soufflage par commande, à l'initiative de l'unité **23** de contrôle, de l'ouverture de l'électrovanne **33**.

La pression PS de soufflage plaque alors intimement la matière de la préforme **3** contre la paroi **11** du moule **8** dont elle prend l'empreinte venant alors former le récipient **2** tout en étant refroidie (et donc figée) à son contact.

S'ensuit une quatrième phase, dite de dégazage, à l'issue de la phase de soufflage, lors de laquelle le volume intérieur du récipient **2** ainsi formé est dégazé par remise à l'atmosphère ambiante (typiquement la pression atmosphérique). La pression interne du récipient **2** chute alors jusqu'à atteindre asymptotiquement la pression atmosphérique. Puis le chariot **16** (avec la tige **17**) est remonté en position haute, le moule **8** est ouvert et le récipient **2** formé est évacué pour permettre la répétition du cycle.

La durée de la phase de présoufflage, incluant l'étirage, est de l'ordre de (ou inférieure à) 200 ms.

La durée de la phase de soufflage est de l'ordre de 700 ms à 1 s.

Quant à la phase de dégazage, elle est d'une durée de l'ordre de 400 à 500 ms.

Au total, le cycle de formage d'un récipient **2** entre l'introduction de la préforme **3** dans le moule **8** et l'évacuation du récipient **2** formé du moule **8** est de l'ordre de (ou inférieur) à 1,8 seconde environ.

Des essais ont permis de démontrer qu'il est possible de réaliser des économies substantielles d'énergie en diminuant la pression PS de soufflage tout en augmentant la vitesse d'étirage $V_E$, sans sacrifier la qualité du récipient **2**.

Plus précisément, il a été constaté qu'en combinant :

- une pression **PS** de soufflage inférieure ou égale à 20 bars ; et

- une vitesse $V_E$ d'étirage ayant au moins temporairement un maximum supérieur ou égal à 2,5 m/s,

il est possible de former correctement un récipient **2** en le chauffant préalablement à une température plus basse, ce qui permet de diminuer la consommation de puissance au niveau du four.

Un accroissement de la vitesse $V_E$ d'étirage aurait dû en théorie aboutir à un amincissement important de l'épaisseur de matière et donc à un affaiblissement du récipient **2**. Or il a étonnamment été constaté qu'il n'en est rien. Une explication plausible est que l'étirage rapide de la préforme **3** provoque au niveau moléculaire, au sein même de la matière, un échauffement par frottement qui compense la diminution de la température de chauffe et permet par conséquent un formage au moins aussi qualitatif qu'à l'ordinaire, car cet auto-échauffement de la matière favorise une meilleure prise d'empreinte de la matière contre la paroi **11**.

Au cours de la phase de présoufflage, la tige suit :

- premièrement, une phase d'accélération qui la fait passer d'une vitesse nulle, correspondant à l'arrêt en position haute, à une valeur nominale ;
- deuxièmement,, une phase de stabilisation au cours de laquelle la vitesse de déplacement de la tige **17** est sensiblement constante à sa valeur nominale ;
- troisièmement, une phase de décélération au cours de laquelle la vitesse de déplacement de la tige 17 décroit depuis la valeur nominale jusqu'à une valeur nulle correspondant à l'arrêt au contact avec le fond **13** de moule.

Selon un mode préféré de réalisation, la valeur nominale correspond au maximum atteint par la tige **17** pendant toute la phase de stabilisation. Cette phase de stabilisation s'étend avantageusement pendant la majeure partie de la phase de présoufflage. En d'autres termes, la vitesse maximale est maintenue pendant la majeure partie de la phase de présoufflage.

Il est d'ailleurs avantageux que la tige **17** aborde cette phase de stabilisation avant même d'accoster le fond **6** de la préforme **3**. En d'autres termes, la tige **17** atteint sa vitesse maximale avant même d'entrer en contact avec le fond **6** de la préforme **3**.

Cela permet d'accélérer la phase de présoufflage et donc de réaliser des gains de temps sur le soufflage, au bénéfice de la qualité du récipient **2** produit.

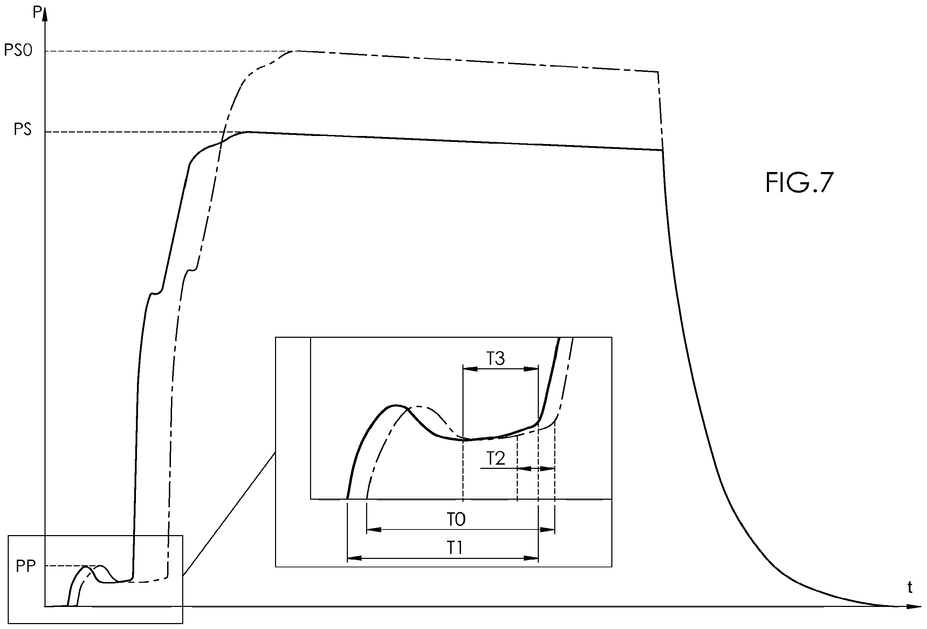

On a tracé sur la **FIG.7** deux graphes :

- en trait fin mixte, une courbe de pression normale, correspondant à une température de chauffe habituelle, à une vitesse $V_E$ d'étirage habituelle (de l'ordre de 2 m/s) et à une pression **PS0** de soufflage de l'ordre de 30 bars ;
- en trait gras continu, une courbe de pression correspondant à une vitesse $V_E$ d'étirage élevée (ici 3 m/s) et une pression **PS** de soufflage comparativement plus faible (ici 20 bars).

La durée du présoufflage, mesurée entre l'ouverture de l'électrovanne **32** de présoufflage et l'ouverture de l'électrovanne **33** de soufflage est notée **T0** pour la courbe de pression normale (en trait fin mixte), et **T1** pour la courbe de pression correspondant à la vitesse d'étirage supérieure (en trait gras continu).

Par ailleurs, l'intervalle de temps séparant l'instant où la tige **17** atteint sa position basse et la fin du présoufflage est noté **T2** pour la courbe de pression normale (en trait fin mixte), et **T3** pour la courbe de pression correspondant à la vitesse d'étirage supérieure (en trait gras continu).

Les intervalles **T2** et **T3** correspondent, dans les deux cas, au gonflement radial de la préforme **3** sous l'effet de la pression de présoufflage. Dans ce qui suit, on nomme « temps de gonflement radial » les intervalles **T2** et **T3.**

On voit dans le médaillon de détail de la **FIG.7** que les durées de présoufflage **T0** et **T1** sont identiques, mais que les temps **T2, T3** de gonflement radial sont différents. Plus précisément, il apparaît que le temps **T3** de gonflement radial mesuré sur la courbe de pression correspondant à une vitesse d'étirage élevée, est supérieur au temps **T2** de gonflement radial mesuré sur la courbe de pression correspondant à une vitesse d'étirage habituelle :

$$T3 > T2$$

Dans l'exemple illustré sur la **FIG.7,** le temps **T3** de gonflement est même de l'ordre du double du temps **T2** de gonflement :

$$T3 \cong 2 \cdot T2$$

C'est cet allongement du temps de gonflement radial, conséquence de l'augmentation de la vitesse d'étirage, qui permet, entre autres, une meilleure prise d'empreinte de la préforme **3** à la fin du présoufflage et autorise une baisse de la pression de soufflage pour une qualité de récipient identique ou supérieure.

Une autre option permise par l'utilisation d'une vitesse accrue d'étirage est la possibilité de réduire la durée totale du présoufflage tout en conservant le temps de gonflement radial (dans ce cas T3 ≅ T2). Le gain de temps ainsi réalisé permet d'accroître la durée du soufflage.

Dans tous les cas, le temps de contact du récipient **2** avec la paroi **11** est supérieur dans le cas de la vitesse d'étirage élevée, puisque la matière entre en contact plus tôt avec celle-ci et est maintenue en contact plus longtemps.

Grâce à l'étirage rapide et la combinaison de l'optimisation des temps de présoufflage et de soufflage, accompagnés de l'auto-échauffement de la préforme **3,** on obtient des récipients **2** de qualité équivalente ou meilleure à ceux obtenus avec une vitesse d'étirage ordinaire ; de plus la diminution de la pression de soufflage et, le cas échéant, un chauffage moindre entraînent de substantielles économies d'énergie.

**Revendications**

1. Procédé de fabrication d'un récipient (2) par étirage soufflage à partir d'une préforme (3) en matière plastique comprenant un corps (4) sensiblement cylindrique, un col (5) dont la forme est définitive, et un fond hémisphérique (6) qui ferme le corps (4) à l'opposé du col (5), au sein d'une unité (7) de formage comprenant :

   - un moule (8) pourvu d'une paroi (11) latérale et d'un fond (13) de moule à l'empreinte, conjointement, du récipient (2), et
   - une tige (17) d'étirage montée mobile en translation par rapport au moule (8) entre une position haute dans laquelle la tige (17) est écartée du fond (13) de moule, la tige (17) étant, en position haute, complètement sortie du moule (8), une extrémité (19) inférieure libre de la tige (17) se trouvant à une distance du moule (8) supérieure à la hauteur du col (5), et une position basse dans laquelle la tige (17) étant au voisinage immédiat du fond (13) de moule, la matière du récipient (2) étant prise en sandwich entre l'extrémité (19) inférieure libre de la tige (17) et le fond (13) de moule,

   ce procédé comprenant :

   - lors d'une première phase, le déplacement de la tige d'étirage (17) depuis sa position haute vers une position de départ dans laquelle l'extrémité (19) libre de la tige (17) vient au contact du fond (6) de la préforme (3),
   - ensuite, une deuxième phase de présoufflage lors de laquelle un fluide à une pression (PP) dite de présoufflage est injecté dans la préforme (3) et dans le même temps la tige (17) est déplacée de sa position de départ vers sa position basse ;
   - ensuite, une troisième phase de soufflage lors de laquelle un fluide à une pression (PS) dite de soufflage, supérieure à la pression (PP) de présoufflage, est injecté dans la préforme (3), la pression (PS) de soufflage plaquant intimement la matière de la préforme (3) contre la paroi (11) du moule (8) dont elle prend l'empreinte, venant alors former le récipient (2) tout en étant refroidie à son contact ;

lors de la phase de présoufflage, la vitesse de déplacement de la tige (17) d'étirage est réglée de sorte à maintenir le contact entre l'extrémité (19) libre de la tige (17) et le fond (6) de la préforme (3) ;

à la fin de cette phase de présoufflage, la tige (17) d'étirage, dans sa position basse, vient plaquer localement le fond (6) de la préforme (3) contre le fond (13) de moule ;

ce procédé étant **caractérisé en ce que** :

- la vitesse maximale de déplacement de la tige (17) au cours de la phase de présoufflage est supérieure ou égale à 2,5 m/s ;
- la pression (PS) de soufflage est inférieure ou égale à 20 bars.

**2.** Procédé selon la revendication 1, **caractérisé en ce que** la vitesse maximale est maintenue pendant la majeure partie de la phase de présoufflage.

**3.** Procédé selon la revendication 1 ou la revendication 2, **caractérisé en ce que** la vitesse maximale de déplacement de la tige (17) est de l'ordre de 3 m/s.

**4.** Procédé selon l'une des revendications précédentes, **caractérisé en ce que** la pression (PS) de soufflage est de l'ordre de 20 bars.


**Patentansprüche**

**1.** Verfahren zur Herstellung eines Behälters (2) durch Streckblasen ausgehend von einer Vorform (3) aus Kunststoff, die einen im Wesentlichen zylindrischen Körper (4), einen Hals (5), dessen Form endgültig ist, und einen halbkugelförmigen Boden (6) umfasst, der den Körper (4) gegenüber dem Hals (5) verschließt, innerhalb einer Formgebungseinheit (7), die enthält:

- eine Form (8), die mit einer Seitenwand (11) und einem Formboden (13), die zusammen dem Abdruck des Behälters (2) entsprechen, versehen ist, und
- eine Streckstange (17), die bezüglich der Form (8) zwischen einer oberen Stellung, in der die Stange (17) vom Formboden (13) entfernt ist, wobei die Stange (17) in der oberen Stellung vollständig aus der Form (8) herausgezogen ist, wobei ein freies unteres Ende (19) der Stange (17) weiter von der Form (8) entfernt ist als der Hals (5) hoch ist, und einer unteren Stellung, in der die Stange (17) dem Formboden (13) unmittelbar benachbart ist, translationsbeweglich montiert ist, wobei sich das Material des Behälters (2) sandwichartig zwischen dem freien unteren Ende (19) der Stange (17) und dem Formboden (13) befindet,

wobei dieses Verfahren enthält:

- während einer ersten Phase die Bewegung der Streckstange (17) von ihrer oberen Stellung zu einer Ausgangsstellung hin, in der das freie Ende (19) der Stange (17) mit dem Boden (6) der Vorform (3) in Kontakt kommt,
- sodann eine zweite Phase des Vorblasens, während derer ein Fluid auf einem sogenannten Vorblasdruck (PP) in die Vorform (3) eingespritzt und die Stange (17) gleichzeitig von ihrer Ausgangsstellung zu ihrer unteren Stellung hin verschoben wird;
- sodann eine dritte Phase des Blasens, in der ein Fluid auf einem sogenannten Blasdruck (PS) höher als der Vorblasdruck (PP) in die Vorform (3) eingespritzt wird, wobei das Material der Vorform (3) durch den Blasdruck (PS) eng gegen die Wand (11) der Form (8) gepresst wird, von der es der Abdruck ist, wodurch somit der Behälter (2) gebildet wird, während er bei Kontakt damit abgekühlt wird;
wobei die Bewegungsgeschwindigkeit der Streckstange (17) bei der Vorblasphase so geregelt wird, dass der Kontakt zwischen dem freien Ende (19) der Stange (17) und dem Boden (6) der Vorform (3) aufrechterhalten wird,
wobei die Streckstange (17) am Ende dieser Vorblasphase in ihrer unteren Stellung den Boden (6) der Vorform (3) örtlich gegen den Formboden (13) drückt,
wobei dieses Verfahren **dadurch gekennzeichnet ist, dass**:

- die maximale Verschiebegeschwindigkeit der Stange (17) während der Vorblasphase höher als oder gleich 2,5 m/s ist;
- der Blasdruck (PS) niedriger als oder gleich 20 Bar ist.

**2.** Verfahren nach Anspruch 1, **dadurch gekennzeichnet, dass** die maximale Geschwindigkeit während des größten Teils der Vorblasphase beibehalten wird.

**3.** Verfahren nach Anspruch 1 oder Anspruch 2, **dadurch gekennzeichnet, dass** die maximale Verschiebegeschwindigkeit der Stange (17) in der Größenordnung von 3 m/s liegt.

**4.** Verfahren nach einem der vorhergehenden Ansprüche, **dadurch gekennzeichnet, dass** der Blasdruck (PS) in der Größenordnung von 20 Bar liegt.

**Claims**

1. Method for manufacturing a container (2) by stretch-blow moulding starting from a preform (3) made of plastic comprising a substantially cylindrical body (4), a neck (5) whose shape is final, and a hemispherical bottom (6) which closes the body (4) at the opposite end from the neck (5), inside a forming unit (7) comprising:

- a mould (8) provided with a side wall (11) and with a mould bottom (13) which together bear the impression of the container (2), and
- a stretch rod (17) mounted with the ability to move translationally with respect to the mould (8) between a raised position in which the rod (17) is distanced from the mould bottom (13), the rod (17) being, in the raised position, completely withdrawn from the mould (8), a free lower end (19) of the rod (17) being situated at a distance from the mould (8) greater than the height of the neck (5), and a lowered position in which the rod (17) is in the immediate vicinity of the mould bottom (13), the material of the container (2) being sandwiched between the free lower end (19) of the rod (17) and the mould bottom (13), this method comprising:

- during a first phase, the movement of the stretch rod (17) from its raised position to a starting position in which the free end (19) of the rod (17) comes into contact with the bottom (6) of the preform (3),
- then, a second pre-blow phase during which a fluid at a pressure (PP) referred to as the pre-blow pressure is injected into the preform (3) and at the same time the rod (17) is moved from its starting position to its lowered position;
- then, a third blowing phase during which a fluid at a pressure (PS) referred to as the blow-moulding pressure, higher than the pre-blow pressure (PP), is injected into the preform (3), the blow-moulding pressure (PS) intimately pressing the material of the preform (3) against the wall (11) of the mould (8) of which it bears the impression, then forming the container (2) while being cooled upon its contact;
during the pre-blow phase, the speed at which the stretch rod (17) moves is adjusted so as to maintain the contact between the free end (19) of the rod (17) and the bottom (6) of the preform (3);
at the end of this pre-blow phase, the stretch rod (17), in its lower position, locally presses the bottom (6) of the preform (3) against the mould bottom (13); this method being **char-**acterized in that:

- the maximum speed at which the rod (17) moves during the pre-blow phase is greater than or equal to 2.5 m/s;
- the blow-moulding pressure (PS) is less than or equal to 20 bar.

2. Method according to Claim 1, **characterized in that** the maximum speed is maintained for the majority of the pre-blow phase.

3. Method according to Claim 1 or Claim 2, **characterized in that** the maximum speed at which the rod (17) moves is of the order of 3 m/s.

4. Method according to one of the preceding claims, **characterized in that** the blow-moulding pressure (PS) is of the order of 20 bar.

FIG.1

FIG.2

FIG.3

FIG.4  FIG.5  FIG.6

EP 3 263 312 B2

FIG.7

**EP 3 263 312 B2**

## RÉFÉRENCES CITÉES DANS LA DESCRIPTION

### Documents brevets cités dans la description

- US 2011056809 A1
- US 2014205707 A1
- WO 2012156614 A
- WO 2008081107 A